# EUROPEAN PATENT SPECIFICATION

(11) **EP 0 339 941 B1**
(45) Date of publication and mention of the grant of the patent: **20.10.1993**
(21) Application number: 89304121.0
(22) Date of filing: 25.04.1989
(51) Int. Cl.: G21K 1/06

(54) **X-ray mirror apparatus and method of manufacturing the same**
Röntgenstrahlungsspiegelvorrichtung und Verfahren zu ihrer Herstellung
Dispositif à miroir à rayons X et son procédé de fabrication

(30) Priority: 28.04.1988 JP 104096/88
(43) Date of publication of application: 02.11.1989
(73) Proprietor: KABUSHIKI KAISHA TOSHIBA, Kawasaki-shi, Kanagawa-ken 210 (JP)
(72) Inventor: Ueda, Katsunobu c/o Intellectual Property Division, Minato-ku Tokyo 105 (JP); Sumiya, Mitsuo c/o Intellectual Property Division, Minato-ku Tokyo 105 (JP); Baba, Michio c/o Intellectual Property Division, Minato-ku Tokyo 105 (JP)
(74) Representative: Freed, Arthur Woolf

(56) References cited:
- US-A- 4 063 088
- OPTICAL ENGINEERING, vol. 25, no. 8, August 1986, pages 970-978, Society of Photo-Optical Instrumentation Engineers, Bellingham, Washington, US; R.B. HOOVER et al.: "Spectral slicing X-ray telescope"

## Description

The present invention relates to an X-ray mirror apparatus for use, for example, in an X-ray microscope and a method of manufacturing the same.

An X-ray has a longer wavelength than that of visible light and a greater transmission power than an electron beam. Since the X-ray has an absorption wave-length band inherent to each element, it is possible to identify a specified element through the utilization of the aforementioned nature of the X-ray as well as a fluorescent X-ray. For this reason, the X-ray provides an important means capable of obtaining atomic level information relating to an object.

In the X-ray wavelength region, however, the refractive index of an object is very approximate to unity. It has, therefore, been difficult to manufacture lenses and mirrors for X-rays, which have the same functions as that of a refractive lens and a direct incident type reflecting mirror used in the visible region.

A recently developed X-ray microscope uses an X-ray mirror utilizing such a nature that when an X-ray is incident at a very great angle on a reflection surface, that is, when it is incident at a grazing angle thereon, a total reflection occurs. Similar mirrors are used under the name "Wolter-type", for instance in X-ray telescopes. To this extent see the documents US-A-4063088 and Optical Engineering Vol.25 no.8 August 1986, pages 970-978, Society of Photo-Optical Instrumentation Engineers, Bellingham, Washington, US. R.B. Hoover et al: "Spectral slicing X-ray telescope". The inner surface of a Wolter-type mirror body has a reflection surface in the shape of a hyperboloid of revolution and a reflection surface in the shape of an ellipsoid of revolution, with both surfaces being in a continuous relation.
The Applicants have proposed, in the case of applying the X-ray mirror having the aforementioned configuration to a X-ray microscope, to dispose X-ray shielding plates one at each open end of the X-ray mirror so that an X-ray which is reflected on the two reflecting surfaces may be imaged on a detector. The X-ray shielding plates are adapted to shield that X-rays of an X-ray beam emerging from the object point which are directed toward the detector without being incident on the reflection surfaces. The X-rays enter into the mirror through an annular slit defined between the peripheral edge of one of the X-ray shielding plates and one open end edge of the mirror and leave the mirror through an annular slit defined between the peripheral edge of the other X-ray shielding plate and the other open end edge of the mirror. It is necessary that these slits be coaxially located with the center axis of the X-ray mirror with an accuracy of several µm to several 10 µm.

In a conventional X-ray microscope having the X-ray mirror, the two X-ray shielding plates are coupled by a plurality of wires or rods to the mirror so as to be located coaxial therewith. In this structure, however, a part of the slit is shielded by the wires or rods, thus causing a fall in the light collection efficiency of the X-ray beam. Furthermore, due to a fall in the X-ray collection efficiency, a blurred image and a scattering of an X-ray may occur. The scattering of an X-ray induces ghosts. It has also been very difficult, in view of the X-ray not being visible light, to accurately align the X-ray shielding plates with the X-ray mirror and it has also been cumbersome to perform the alignment.

An object of the present invention is to provide an X-ray mirror apparatus capable of readily and exactly aligning an X-ray shielding plate with an X-ray mirror and a method for manufacturing the same.

According to one aspect of the present invention, there is provided an X-ray mirror apparatus comprising: a Wolter-type mirror body having opened ends and an inner surface which forms a reflecting mirror surface having a surface of revolution; characterized in that X-ray shielding means are provided on at least one opened end of the mirror body, said shielding means including an X-ray shielding plate provided on said one opened end to block a central part of the latter, and a substantially annular slit, so as to allow only passage of X-rays entering onto the reflecting mirror surface and X-rays reflected on the reflecting mirror surface; and in that said X-ray shielding means includes fitting means fitted to said one opened end portion of the mirror body, for positioning the X-ray shielding plate with respect to the mirror body so that the slit is located coaxially with the optical axis of the reflecting mirror surface.

In this apparatus, the X-ray shielding means may have a mating section fitted over the end portion of the mirror body whereby the slit is positioned coaxial with the reflecting mirror surface. It is thus possible to readily and positively align the slit with the reflecting mirror surface.

According to a further aspect of the present invention, there is provided a method of manufacturing an X-ray shielding member which is provided on an open end of a Wolter-type X-ray mirror body having an inner surface defining a reflecting mirror surface having a surface of revolution and which allows only passage of X-rays entering onto the reflecting mirror surface and X-rays reflected on the reflecting mirror surface, characterized in that the method comprises the steps of: forming a first circular X-ray shielding section, by physical vapor deposition, on an X-ray transmitting film which has a size enough great to block said one open end of the X-ray mirror; fixing a second annular X-ray shielding section on the X-ray transmission film such that it is located coaxially with and outside the first X-ray shielding section with an annular space therebetween, thereby defining an annular split, which allows passage of X-rays, between the first and second X-ray shielding sections; and fixing a cylindrical fitting member, which is capable of fitting over said one end portion of the X-ray mirror, on the second X-ray shielding section in a relation coaxial with the annular slit.

According to another aspect of the present invention, there is provided a method of manufacturing an X-ray shielding member which is provided on an open end of a Wolter-type X-ray mirror body having an inner surface defining a reflecting mirror surface having a surface of revolution and which allows only passage of X-rays entering onto the reflecting mirror surface and X-rays reflected on the reflecting mirror surface, characterized in that the method comprises the steps of: forming an x-ray penetrable slit of a substantially annular configuration, by a photoetching, in an X-ray shielding plate which has a size enough great to block said one open end of the X-ray mirror and which prevents passage of X-rays; and fixing a cylindrical fitting member, which is capable of fitting over said one open end portion of the X-ray mirror, on the X-ray shielding plate on the outer side of the slit to be coaxial therewith.

This invention can be more fully understood from the following detailed description when taken in conjunction with the accompanying drawings, in which:
Fig. 1 is a longitudinal sectional view showing an X-ray mirror apparatus according to a first embodiment of the present invention;
Fig. 2 is a front view showing an X-ray shielding member of the X-ray mirror apparatus of Fig. 1;
Fig. 3 is a longitudinal sectional view showing an X-ray mirror apparatus according to a second embodiment of the present invention;
Fig. 4 is a front view showing an X-ray shielding member of the X-ray mirror apparatus of Fig. 3; and
Fig. 5 is a longitudinal sectional view showing an X-ray mirror apparatus according to a third embodiment of the present invention.

Embodiments of the present invention will be explained in detail with reference to the accompanying drawings.

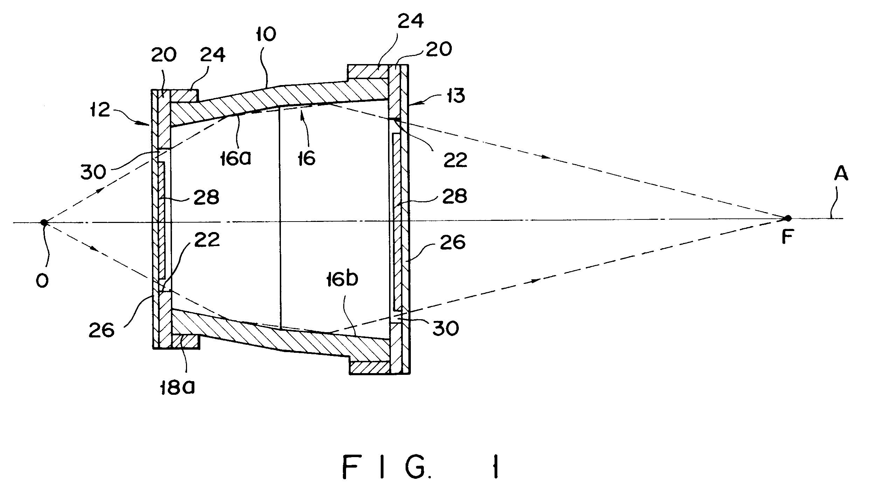

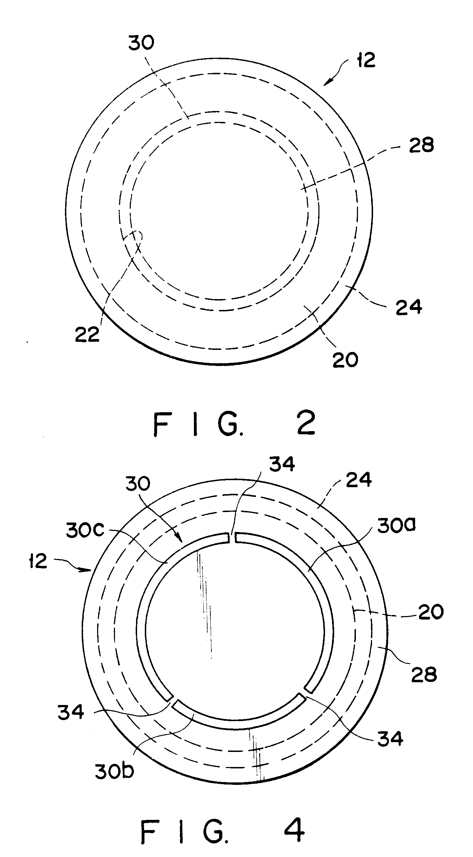

Figs. 1 and 2 show an X-ray mirror apparatus according to a first embodiment of the present invention. The apparatus comprises a Wolter-type mirror body 10 opened at both ends and a pair of X-ray shielding members 12 and 13 provided at both ends of the mirror body.

The mirror body 10 is made of, for example, copper or nickel, and a gold film is coated on the inner surface thereof. The inner surface of the mirror body 10 constitutes a tandem type reflecting mirror surface 16. Specifically, in the inner wall surface of the mirror body 10, a first reflecting mirror surface 16a forming a hyperboloid of revolution is provided at one end portion of the mirror body 10 and a second reflecting mirror surface 16b forming an ellipsoid of revolution is provided at the other end portion of the mirror body. The first and second reflecting mirror surfaces 16a and 16b are coaxially formed in a continuous relation. The outer circumferential surfaces of both end portions of the mirror body 10 are formed to be coaxial with the mirror surfaces 16a and 16B, and constitute first and second engage sections 18a and 18b, respectively.

The X-ray shielding member 12 has a ring 20 formed of a 2 mm-thick copper plate and having a circular inner opening, and a cylindrical fitting member 24 fixed to one surface of the ring 20 in a relation coaxial with the inner opening 22. The inner diameter of the fitting member 24 is substantially equal to the outer diameter of the engage section 18a. An X-ray transmitting film 26 is fixed to the other surface of the ring 20 and closes the inner opening 22. The film 26 about 2 µm thick is formed of a material, such as polyethylene, beryllium and lithium. A circular X-ray shielding film 28 is formed, by means of, for example, a vapor deposition method or sputtering method, on that surface of the film 26 which contacts with the ring 20. The X-ray shielding film 28 about 5 µm thick is formed of a material, such as gold or platinum. The film 28 is formed coaxially with the inner opening 22 and has a smaller diameter than that of the inner opening 22. Thus, an annular slit 30 is defined between the edge of the inner opening 22 and the outer circumferential edge of the X-ray shielding film.

The X-ray shielding member 12 thus formed is fixed to one end of the mirror body by fitting the fitting member 24 over the engage section 18a of the mirror body 10. As set forth above, the engage section 18a is formed coaxial with the reflecting mirror surface 16 and the fitting section 24 of the X-ray shielding member 12 is located coaxially with the inner opening 22. Accordingly, with the X-ray shielding member 12 mounted on the mirror body 10, the slit 30 is located exactly coaxially with the reflecting mirror surface surface 16. An X-ray transmission ratio between the X-ray shielding film 28 and the X-ray transmission film 26 is 1 : 1000.

The other X-ray shielding member 13 is similarly constructed as the X-ray shielding member 12. In this case, the same reference numerals are employed to designate parts or elements corresponding to those shown in the X-ray shielding member 12 and further explanation is, therefore, omitted. In this connection, it is to be noted that the diameter of each component of the X-ray shielding member 13 is set greater than that of the light shielding member 12 so as to conform to the reflecting mirror surface 16b. The X-ray shielding member 13 is fixed to the other end of the mirror body 10 by fitting the fitting member 24 over the engage section 18b of the mirror body 10. While the X-ray shielding member 13 is fitted over the mirror body 10,a slit 30 of the member 13 is exactly located coaxial with the reflecting mirror surface 16.

According to the X-ray mirror apparatus having the above construction, as is shown in Fig. 1, most of X-rays of an X-ray beam passing through an object point 0 situated on the optical axis A of the reflecting mirror surface 16 of the mirror body 10 are shielded by the X-ray shielding film 28 of the X-ray shielding member 12. Only some X-rays enter into the mirror body 10 through the X-ray transmission film 26 and slit 30. The slit 30, in particular, is so located and dimensioned as to allow only passage of those X-rays of an X-ray beam which will incident on the first reflecting mirror surface 16a of the mirror body 10.

The X-rays, which are incident on the reflecting mirror surface 16a, are reflected there and incident on the second reflecting mirror surface 16b. After being reflected on the reflection mirror surface 16b, the X-rays are directed toward the X-ray shielding member 13. The slit 30 of the X-ray shielding member 13 is so formed as to be located on an optical path of those X-rays which are reflected on the reflecting mirror surface 16b. Thus, the X-rays, after passing through the slit 30 and X-ray transmitting film 26, are imaged on a focal point F on the optical axis A of the reflecting mirror surface 16.

According to the X-ray mirror apparatus thus constructed, the respective X-ray shielding member has the fitting member 24 and is mounted on the mirror body 10 by fitting the fitting member over the engage section of the mirror body 10. Since the fitting member 24 is located coaxially with the slit 30, the slit can be readily brought into exact alignment with the center axis of the reflecting mirror surface 16 of the mirror body 10 by simply fitting the fitting member 24 over the corresponding engage section of the mirror body. Thus, any cumbersome alignment control which might otherwise have been required in the conventional apparatus is unnecessary, so that an apparatus of high accuracy can be effectively manufactured.

Since the slit 30 of the X-ray shielding member is defined by the inner peripheral edge of the ring 20 and outer peripheral edge of the X-ray shielding film 28, any wires or rods, which are employed in the conventional apparatus, are not located in the slit 30. It is thus possible to prevent a decline in the X-ray collection efficiency as well as the scattering of an X-ray. As a result, it is possible to obtain a well-defined X-ray image.

A fuller explanation of a method of manufacturing the X-ray mirror apparatus will be given below and, in particular, a method of manufacturing the X-ray shielding member.

In the manufacture of the X-ray shielding member, first the fitting member 24 is jointed by means of, for example, brazing to the outer peripheral portion of the ring 20 to be coaxial therewith. Then, on the circular X-ray transmitting film 26 which has the same diameter as that of the ring 20, a circular X-ray shielding film 28 about 5 µm is formed by a physical vapor deposition method, such as vapor deposition and sputtering, such that it is coaxial with the X-ray transmitting film. The X-ray transmitting film 26 with the light shielding film 28 is bonded by, for example, a rapid-bonding adhesive to the surface of the ring 20 opposite to that surface on which the fitting member 24 is provided, and is located concentric with the ring 20.

The X-ray shielding member thus manufactured is fixed to the mirror body 10 by fitting the fitting member 24 to the engage section of the mirror body. Upon fitting the X-ray shielding member on the mirror body, the slit of the shielding member is automatically aligned with the center axis of the reflecting mirror surface 16 of the mirror body.

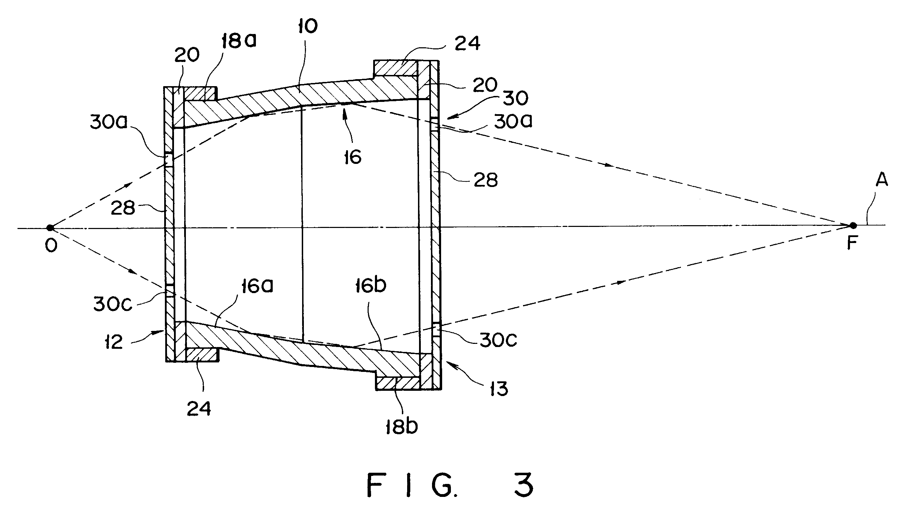

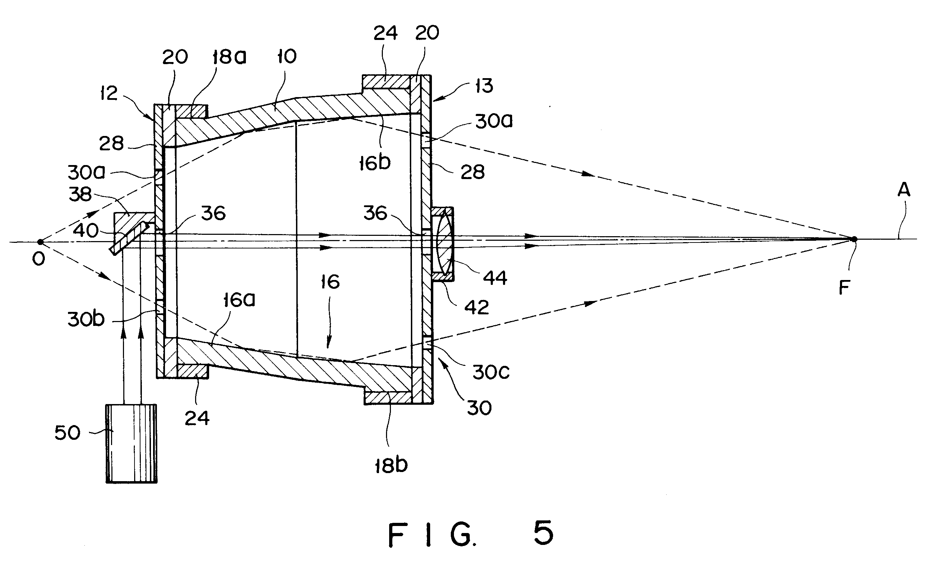

In the aforementioned embodiment, the slit 30 of the respective X-ray shielding member is defined by the ring 20 fixed to the X-ray transmitting film 26 and the X-ray shielding film 28. However, the shielding member may be constructed as is shown in Figs. 3 and 4 (second embodiment).

According to the second embodiment, an X-ray shielding member 12 has a circular X-ray shielding film 28 about 40 µm thick formed of copper and having a slit 30. The slit 30 includes three arcuate openings (or segments) 30a, 30b and 30c. These openings (or segments) extend along a circle which is concentric with that of the X-ray shielding film 28. A thin gold film is coated on each surface of the X-ray shielding film 28 to improve corrosion resistance thereof. That portion of the X-ray shielding film 28 which is located at a boundary between the two adjacent segments constitutes a bridge 34 about 0.2 mm - thick. A section of the X-ray shielding film 28 located inside the segments 30a to 30c is coupled by the bridges 34 to a section of the X-ray shielding film 28 located outside the segments.

A ring 20 is fixed to the outer marginal portion of one surface of the light shielding film 28. A cylindrical fitting member 24 is fixed to the ring 20 to be coaxial with the X-ray shielding film 28, that is, coaxial with the segments 30a to 30c.

The light shielding member 12 thus constructed is fixed to a mirror body 10 by fitting the fitting member 24 over an engage section 18a of the mirror body. Thus, with the X-ray shielding member 12 attached to the mirror body 10, the segments 30a to 30c of slit 30 are positioned coaxial with the reflecting mirror surface 16.

An X-ray shielding member 13 is also constructed in the same fashion as the X-ray shielding member 12. In this case, identical reference numerals are employed to designate parts and elements corresponding to those shown in the shielding member 12 and further explanation is, therefore, omitted.

According to the X-ray mirror apparatus of the second embodiment, the respective shielding member has the fitting member 24 coaxial with the slit 30 and is mounted on the mirror body 10 by fitting the fitting member over the mirror body. For this reason, the slit 30 can be readily and accurately aligned with the reflecting mirror surface 16 of the mirror body 10.

Furthermore, unlike the first embodiment, the slit is not covered by any light transmitting film. Thus, some X-rays entering into the mirror body 10 or leaving it through the segments 30a to 30c of the slit 30 are not absorbed by that X-ray transmitting film. Furthermore, since the width of the bridges 34 of the respective light shielding member is very small, that is, as small as about 0.1 mm, an amount of X-rays passing through the slit 30 is not lost by the bridges 34. According to the second embodiment, a fall in resolution of the X-ray image does not occur, positively ensuring a well-defined image.

The respective X-ray shielding member of the second embodiment is manufactured in the following way.

First, on the X-ray shielding film 38 is formed a photoresist having a pattern with through holes for forming openings (or segments) 30a to 30c. Then, openings (or segments) 30a to 30c are formed in the X-ray shielding film 28 by a method, such as a chemical etching, dry etching, reactive ion etching or spatter-etching, followed by the removal of the remaining photoresist. By so doing, the X-ray shielding film 28 is completed. Then, a ring 20 is bonded to the outer marginal portion of the surface of the X-ray shielding film 28, and a fitting member 24 formed of copper is jointed by, for example, a brazing to the disc in a relation coaxial with the segments 30a to 30c.

The light shielding member, after being formed, is fitted over the mirror body 10. Since, in this case, the openings (or segments) 30a to 30c are formed by a photoetching method and the light shielding film 28 is mounted on the mirror body 10 by using the fitting member 24, the openings (or segments) 30a to 30c can be positioned coaxially with the optical axis of the reflection mirror surface 16 with an accuracy of a few µm to a few tens of µm.

Since the X-ray shielding member can be readily and accurately aligned with the mirror body, it is possible to highly improve the manufacturing efficiency of the X-ray mirror apparatus.

Fig. 5 shows an X-ray mirror apparatus according to a third embodiment of the present invention.

In this case, identical reference numerals are employed to designate parts or elements corresponding to those shown in the second embodiment. Further explanation is, therefore, omitted.

A through-hole 36 is formed in an X-ray shielding film 28 of X-ray shielding members 12 and 13 to be coaxial with the optical axis A of a reflecting mirror surface 16 of a mirror body 10. A plane mirror 40 is mounted by a support member 38 on the outer surface of the X-ray shielding film 28 of the X-ray shielding member 12 such that it is located opposite to the through hole 36. A lens 44 is mounted by a support member 42 on the outer surface of the X-ray shielding film 28 of the X-ray shielding member 13 so that the optical axis A of the lens 44 is aligned with the center axis of through hole 36. A support member 42 is movably mounted relative to the X-ray shielding film 28 so that the lens 44 may be position-controlled relative to the optical axis A. The apparatus includes a laser oscillator 50 which is arranged outside the mirror body 10 and opposite to the plane mirror 40.

According to the X-ray mirror apparatus thus constructed, a visible laser beam 52 emitted from the laser oscillator 50 is reflected by the mirror 40 and enters into the mirror body 10 through the hole 36. The laser beam is derived out of the mirror body 10 past the through-hole 36 of the X-ray shielding member 13 and focused on a focal point F of the reflecting mirror surface 16 by the lens 44.

According to the apparatus as set forth above, it is possible for the user to visually observe the X-ray focal point F of the reflecting mirror surface 16 with the use of the laser beam. It is thus possible to readily perform various kinds of control operations on the X-ray mirror apparatus, such as to have the X-ray focal point F of the reflecting mirror surface 16 of the X-ray mirror body 10 directed at a desired position.

The present invention is not limited to the above embodiments, and various changes and modifications may be made within the spirit and scope of the present invention. For example, in the aforementioned embodiments, if the X-ray shielding member is provided on at least one end of the mirror body 10, the same advantages as in the aforementioned embodiments can be obtained. The X-ray mirror apparatus of the present invention can be applied to an X-ray telescope, a stepper for a semi-conductor exposure system, and the like without being restricted to an X-ray microscope.

## Claims

1. An X-ray mirror apparatus comprising:
a Wolter-type mirror body (10) having opened ends and an inner surface which forms a reflecting mirror surface (16) having a surface of revolution; characterized in that X-ray shielding means (12 or 13) are provided on at least one opened end of the mirror body (10), said X-ray shielding means (12 or 13) including an X-ray shielding plate (28) provided on said one opened end to block a central part of the latter, and a substantially annular slit (30), so as to allow only passage of X-rays entering onto the reflecting mirror surface (16) and X-rays reflected on the reflecting mirror surface (16); and
in that said X-ray shielding means (12 or 13) includes fitting means fitted to said one opened end portion of the mirror body (10), for positioning the X-ray shielding plate with respect to the mirror body so that the slit (30) is located coaxially with the optical axis of the reflecting mirror surface (16).

2. An apparatus according to claim 1, characterized in that said one open end portion of the mirror body (10) has an outer circumferential surface which is coaxially with the reflecting mirror surface (16) and forms an engage section (18a or 18b), and said fitting means has a cylindrical fitting member (24) which is coaxially with the slit (30) and fitted over the engage section.

3. An apparatus according to claim 1, characterized in that said X-ray shielding means (12 or 13) includes an X-ray transmitting film (26) provided to block said one open end of the mirror body (10), said X-ray shielding plate has a first X-ray shielding section (28) of a circular configuration fixed on one surface of the X-ray transmitting film to be coaxially with an axis of the reflecting mirror surface (16), and a second X-ray shielding section (20) of annular configuration fixed on the surface of the X-ray transmitting film to be coaxial with and located outside said first section, with an annular space therebetween, and said slit (30) is defined by the annular space.

4. An apparatus according to claim 3, characterized in that said fitting means has a cylindrical fitting member (24) fixed to said second section (20) to be coaxial with the slit (30).

5. An apparatus according to claim 2, characterized in that said slit (30) has a plurality of arcuate opening (or segments) (30a to 30c) formed in the X-ray shielding plate (28), and said arcuate openings (or segments) are formed along a circle which is concentric with the axis of the reflecting mirror surface (16).

6. An apparatus according to claim 5, characterized in that said fitting means has a cylindrical fitting member (24) fixed to the X-ray shielding plate (28) to be coaxial with the slit (30).

7. An apparatus according to claim 1, characterized in that said reflecting mirror surface (16) has an X-ray focal spot located outside the mirror body (10) and on the optical axis of the reflecting mirror surface, and
characterized by further comprising:
means for visually observing the X-ray focal spot, said observing means including a through hole (36) formed in the X-ray shielding plate (28) to be coaxial with the reflection mirror surface, light emitting means (50) provided outside the mirror body, for emitting visible light, and an optical system (40, 44) for directing the visible light emitted from the light emitting means toward the X-ray focal spot through the through hole and the interior of the mirror body and imaging the visible light on the X-ray focal spot.

8. An apparatus according to claim 1, characterized in that said reflecting mirror surface (16) has a first reflecting mirror surface (16a) located on one end portion of the mirror body (10) and a second reflecting mirror surface (16b) located on the other end portion of the mirror body in a continuous relation to the first reflecting mirror surface.

9. A method of manufacturing an X-ray shielding member which is provided on an open end of a Wolter-type X-ray mirror body (10) having an inner surface defining a reflecting mirror surface (16) having a surface of revolution and which allows only passage of X-rays entering onto the reflecting mirror surface (16) and X-rays reflected on the reflecting mirror surface (16), characterized in that the method comprises the steps of:
forming a first circular X-ray shielding section (28), by physical vapor deposition, on an X-ray transmitting film (26) which has a size enough great to block said one open end of the X-ray mirror (10);
fixing a second annular X-ray shielding section (20) on the X-ray transmission film such that it is located coaxially with and outside the first X-ray shielding section with an annular space therebetween, thereby defining an annular slit (30), which allows passage of X-rays, between the first and second X-ray shielding sections; and
fixing a cylindrical fitting member (24), which is capable of fitting over said one end portion of the X-ray mirror, on the second X-ray shielding section in a relation coaxial with the annular slit.

10. A method of manufacturing a X-ray shielding member which is provided on an open end of a Wolter-type X-ray mirror body (10) having an inner surface defining a reflecting mirror surface (16) having a surface of revolution and which allows only passage of X-rays entering onto the reflecting mirror surface (16) and X-rays reflected on the reflecting mirror surface, characterized in that the method comprise the steps of:
forming an X-ray penetrable slit (30) of a substantially annular configuration, by a photoetching, in a X-ray shielding plate (28) which has a size enough great to block said one open end of the X-ray mirror (10) and which prevents passage of X-rays; and
fixing a cylindrical fitting member (24), which is capable of fitting over said one open end portion of the X-ray mirror, on the X-ray shielding plate on the outer side of the slit to be coaxial therewith.

## Patentansprüche

1. Röntgenstrahlungsspiegelvorrichtung mit:
einem Woltertyp-Spiegelkörper (10) mit geöffneten Enden und einer Innenoberfläche, welche eine Reflexionsspiegeloberfläche (16) bildet, die eine Rotations-Oberfläche besitzt, dadurch gekennzeichnet, daß
eine Röntgenstrahlungsabschirmeinrichtung (12 oder 13) an mindestens einem geöffneten Ende des Spiegelkörpers (10) bereitgestellt ist, wobei die Röntgenstrahlungsabschirmeinrichtung (12 oder 13) eine Röntgenstrahlungsabschirmplatte (28), die an einem geöffneten Ende bereitgestellt ist, um einen zentralen Teil des letzteren zu blockieren, und einen im wesentlichen ringförmigen Schlitz (30) beinhaltet, um nur den Durchgang von Röntgenstrahlung, die auf die reflektierende Spiegeloberfläche (16) einfällt, und von Röntgenstrahlung, die an der Reflexionsspiegeloberfläche (16) reflektiert wird, zu erlauben; und dadurch daß
die Röntgenstrahlungsabschirmeinrichtung (12 oder 13) eine Montageeinrichtung, die an einen geöffneten Endteilbereich des Spiegelkörpers (10) angepaßt ist, zum Positionieren der Röntgenstrahlungsabschirmplatte bezüglich des Spiegelkörpers beinhaltet, so daß der Schlitz (30) koaxial mit der optischen Achse der Reflexionsspiegeloberfläche (16) gelegen ist.

2. Vorrichtung nach Anspruch 1, dadurch gekennzeichnet, daß ein geöffneter Endteilbereich des Spiegelkörpers (10) eine äußere umfangsmäßige Oberfläche besitzt, die koaxial mit der Reflexionsspiegeloberfläche (16) ist, und daß er einen Kupplungsabschnitt (18a oder 18b) bildet, und daß die Montageeinrichtung ein zylindrisches Montageteil (24) besitzt, welches koaxial mit dem Schlitz (30) ist und über den Kupplungsabschnitt montiert ist.

3. Vorrichtung nach Anspurch 1, dadurch gekennzeichnet, daß die Röntgenstrahlungsabschirmeinrichtung (12 oder 13) einen Röntgenstrahlungsdurchlaßfilm (26) beinhaltet, der bereitgestellt ist, ein offenes Ende des Spiegelkörpers (10) zu blockieren, daß der Röntgenstrahlungsabschirmplatte einen ersten Röntgenstrahlungsabschirmabschnitt (28) eines kreisförmigen Aufbaus, der auf einer Oberfläche des Röntgenstrahlungsdurchlaßfilms befestigt ist, um koaxial mit einer Achse der Reflexionsspiegeloberfläche (16) zu sein, und einen zweiten Röntgenstrahlungsabschirmabschnitt (20) eines ringförmigen Aufbaus besitzt, der auf der Oberfläche des Röntgenstrahlungsdurchlaßfilms befestigt ist, um koaxial mit dem ersten Abschnitt und außerhalb diesem mit einem ringförmigen Abstand dazwischen gelegen ist, und daß der Schlitz (30) durch den ringförmigen Raum definiert ist.

4. Vorrichtung nach Anspruch 3, dadurch gekennzeichnet, daß die Montageeinrichtung ein zylindrisches Montageteil (24) besitzt, das an dem zweiten Abschnitt (20) befestigt ist, um koaxial mit dem Schlitz (30) zu sein.

5. Vorrichtung nach Anspruch 2, dadurch gekennzeichnet, daß der Schlitz (30) eine Vielzahl von gewölbten Öffnungen (oder Segmenten) (30a bis 30c) besitzt, die in der Röntgenstrahlungsabschirmplatte (28) gebildet sind, und daß die gewölbten Öffnungen (oder Segmente) entlang einem Kreis gebildet sind, der mit der Achse der Reflexionsspiegeloberfläche (16) konzentrisch ist.

6. Vorrichtung nach Anspruch 5, dadurch gekennzeichnet, daß die Montageeinrichtung ein zylindrisches Montageteil (24) besitzt, das an der Röntgenstrahlungsabschirmplatte (28) befestigt ist, um koaxial mit dem Schlitz (30) zu sein.

7. Vorrichtung nach Anspruch 1, dadurch gekennzeichnet, daß die Reflexionsspiegeloberfläche (16) einen Röntgenstrahlungsbrennpunkt besitzt, der außerhalb des Spiegelkörpers (10) und auf der optischen Achse der Reflexionsspiegeloberfläche gelegen ist, und
gekennzeichnet durch ferner:
eine Einrichtung zum visuellen Beobachten des Röntgenstrahlungsbrennpunktes, wobei die Beobachtungseinrichtung ein Durchgangsloch (36), das in der Röntgenstrahlungsabschirmplatte (28) ausgeformt ist, um koaxial mit der Reflexionsspiegeloberfläche zu sein, eine Lichtemissionseinrichtung (50), die außerhalb des Spiegelkörpers zum Emittieren sichtbaren Lichts bereitgestellt ist, und ein optisches System (40, 44) zum Leiten des sichtbaren Lichts, das von der Lichtemittierungseinrichtung emittiert wird, auf den Röntgenstrahlungsbrennpunkt zu durch das Durchgangsloch und das Innere des Spiegelkörpers und zum Abbilden des sichtbaren Lichts auf dem Röntgenstrahlungsbrennpunkt, beinhaltet.

8. Vorrichtung nach Anspruch 1, dadurch gekennzeichnet, daß die Reflexionsspiegeloberfläche (16) eine erste Reflexionsspiegeloberfläche (16a), die auf einem Endteilbereich des Spiegelkörpers (10) gelegen ist, und eine zweite Reflexionsspiegeloberfläche (16b), die auf dem anderen Endteilbereich des Spiegelkörpers in einer stufenlosen Verbindung zu der ersten Reflexionsspiegeloberfläche gelegen ist, besitzt.

9. Verfahren zum Herstellen eines Röntgenstrahlungsabschirmteils, welches an einem offenen Ende eines Woltertyp-Röntgenstrahlungsspiegelkörpers (10) bereitgestellt ist, der eine Innenoberfläche besitzt, die eine Reflexionsspiegeloberfläche (16) definiert, die eine Rotations-Oberfläche besitzt, und das nur den Durchgang von Röntgenstrahlung erlaubt, die auf die Reflexionsspiegeloberfläche (16) einfällt, und von Röntgenstrahlung, die an der Reflexionsspiegeloberfläche (16) reflektiert wird, dadurch gekennzeichnet, daß das Verfahren die folgenden Schritte umfaßt:
Bilden eines ersten kreisförmigen Röntgenstrahlungsabschirmabschnitts (28) durch physikalische Dampfabscheidung auf einem Röntgenstrahlungsdurchlaßfilm (26), der eine genügend große Größe besitzt, um ein offenes Ende des Röntgenstrahlungsschirms (10) zu blockieren;
Befestigen eines zweiten ringförmigen Röntgenstrahlungsabschirmabschnitts (20) auf dem Röntgenstrahlungsdurchlaßfilm derart, daß er koaxial mit dem ersten Röntgenstrahlungsabschirmabschnitt und außerhalb dessen mit einem ringförmigen Raum dazwischen gelegen ist, um so einen ringförmigen Schlitz (30) zu definieren, welcher den Durchgang der Röntgenstrahlung zwischen dem ersten und zweiten Röntgenstrahlungsabschirmabschnitt erlaubt; und
Befestigen eines zylindrischen Montageteils (24), welches in der Lage ist, über den einen Endteilbereich des Röntgenstrahlungsspiegels auf dem zweiten Röntgenstrahlungsabschirmabschnitt in einer koaxialen Beziehung mit dem ringförmigen Schlitz montiert zu werden.

10. Verfahren zum Herstellen eines Röntgenstrahlungsabschirmteils, welches an einem offenen Ende eines Woltertyp-Röntgenstrahlungsspiegelkörpers (10) bereitgestellt ist, der eine Innenoberflache besitzt und eine Reflexionsspiegeloberfläche (16) definiert, die eine Rotations-Oberfläche besitzt, und welches nur den Durchgang von Röntgenstrahlung, die die Reflexionsspiegeloberfläche (16) betritt, und von Röntgenstrahlung, die auf der Reflexionsspiegeloberfläche (16) reflektiert wird, erlaubt,
dadurch gekennzeichnet, daß das Verfahren die folgenden Schritte umfaßt:
Ausformen eines röntgenstrahlungsdurchlässigen Schlitzes (30) eines im wesentlichen ringförmigen Aufbaus durch ein Photoätzen in einer Röntgenstrahlabschirmplatte (28), die groß genug ist, um ein offenes Ende des Röntgenstrahlungsspiegels (10) zu blockieren, und die einen Durchgang von Röntgenstrahlen verhindert; und
Befestigen eines zylindrischen Montageteils (24), welches imstande ist, über einen offenen Endteilbereich eines Röntgenstrahlungsspiegels zu passen, auf der Röntgenstrahlabschirmplatte auf der Außenseite des Schlitzes, um damit koaxial zu sein.

## Revendications

1. Dispositif de miroir à rayons X, comprenant :
un corps de miroir (10) de type Wolter comportant des extrémités ouvertes, ainsi qu'une surface interne qui forme une surface réfléchissante de miroir (16) comportant une surface de révolution,
caractérisé en ce que des moyens (12 ou 13) opaques aux rayons X sont prévus sur au moins une extrémité ouverte du corps de miroir (10), lesdits moyens (12 ou 13) opaques aux rayons X englobant une plaque (28) opaque aux rayons X prévue sur ladite extrémité ouverte pour bloquer une partie centrale de cette dernière et une fente essentiellement annulaire (30) de façon à permettre uniquement le passage de rayons X pénétrant sur la surface réfléchissante de miroir (16) et de rayons X réfléchis par la surface réfléchissante de miroir (16); et
en ce que lesdits moyens (12 ou 13) opaques aux rayons X englobent des moyens d'installation installés sur ladite portion terminale ouverte du corps de miroir (10) pour positionner la plaque opaque aux rayons X par rapport au corps de miroir, si bien que la fente (30) est disposée coaxialement à l'axe optique de la surface réfléchissante de miroir (16).

2. Dispositif selon la revendication 1, caractérisé en ce que ladite portion terminale ouverte du corps de miroir (10) comporte une surface circonférentielle externe qui est coaxiale à la surface réfléchissante de miroir (16) et qui forme une section de contact (18a ou 18b), ledit moyen d'installation comportant un élément d'installation cylindrique (24) qui est coaxial à la fente (30) et est installé par-dessus la section de contact.

3. Dispositif selon la revendication 1, caractérisé en ce que ledit moyen (12 ou 13) opaque aux rayons X englobe un film (26) transmettant les rayons X, prévu pour bloquer ladite extrémité ouverte du corps de miroir (10), ladite plaque opaque aux rayons X comportant une première section (28) opaque aux rayons X de configuration circulaire fixée sur une surface du film de transmission des rayons X pour être coaxiale à un axe de la surface réfléchissante de miroir (16), et une seconde section (20) opaque aux rayons X de configuration annulaire fixée sur la surface du film de transmission des rayons X pour être coaxiale à ladite première section, tout en étant disposée à l'extérieur de cette dernière, un espace annulaire étant ménagé entre elles, ladite fente (30) étant définie par l'espace annulaire.

4. Dispositif selon la revendication 3, caractérisé en ce que ledit moyen d'installation comporte un élément d'installation cylindrique (24) fixé à ladite seconde section (20) pour être coaxial à la fente (30).

5. Dispositif selon la revendication 2, caractérisé en ce que ladite fente (30) comporte plusieurs ouvertures arquées (ou plusieurs segments arqués) (30a à 30c) formés dans la plaque (28) opaque aux rayons X et lesdites ouvertures (ou lesdits segments) arqués sont formés le long d'un cercle qui est concentrique à l'axe de la surface réfléchissante de miroir (16).

6. Dispositif selon la revendication 5, caractérisé en ce que ledit moyen d'installation comporte un élément d'installation cylindrique (24) fixé à la plaque (28) opaque aux rayons X pour être coaxial à la fente (30).

7. Dispositif selon la revendication 1, caractérisé en ce que ladite surface réfléchissante de miroir (16) comporte un foyer des rayons X disposé à l'extérieur du corps de miroir (10) et sur l'axe optique de la surface réfléchissante du miroir, et
caractérisé par le fait qu'il comprend, en outre :
un moyen pour observer à l'oeil nu le foyer des rayons X, ledit moyen d'observation englobant un trou traversant (36) formé dans la plaque (28) opaque aux rayons X pour être coaxial à la surface réfléchissante du miroir, un moyen (50) émettant de la lumière prévu à l'extérieur du corps de miroir pour émettre de la lumière visible, ainsi qu'un système optique (40, 44) pour diriger la lumière visible émise par le moyen d'émission de lumière en direction du foyer des rayons X à travers le trou traversant et en direction de l'intérieur du corps de miroir, et représentant la lumière visible sous forme d'image sur le foyer des rayons X.

8. Dispositif selon la revendication 1, caractérisé en ce que ladite surface réfléchissante de miroir (16) comporte une première surface réfléchissante de miroir (16a) disposée sur une première portion terminale du corps de miroir (10) et une seconde surface réfléchissante de miroir (16b) disposée sur l'autre portion terminale du corps de miroir dans une relation continue avec la première surface réfléchissante du miroir.

9. Procédé de fabrication d'un élément opaque aux rayons X qui est prévu sur une extrémité ouverte d'un corps de miroir (10) à rayons X du type Wolter comportant une surface interne définissant une surface réfléchissante de miroir (16) possédant une surface de révolution et qui permet uniquement le passage de rayons X pénétrant sur la surface réfléchissante de miroir (16) et des rayons X réfléchis par la surface réfléchissante de miroir (16), caractérisé en ce que le procédé comprend les étapes consistant à :
former une première section circulaire (28) opaque aux rayons X par déposition en phase gazeuse sur un film (26) qui transmet les rayons X, dont la dimension est suffisamment grande pour bloquer ladite extrémité ouverte du miroir (10) pour rayons X;
fixer une seconde section annulaire (20) opaque aux rayons X sur le film de transmission des rayons X de telle sorte qu'elle soit disposée coaxialement à la première section opaque aux rayons X et à l'extérieur de cette dernière, un espace annulaire étant ménagé entre elles, définissant ainsi une fente annulaire (30) qui permet le passage des rayons X, entre les première et seconde sections opaques aux rayons X; et
fixer un élément d'installation cylindrique (24) qui est capable d'être installé par-dessus ladite portion terminale du miroir pour rayons X sur la seconde section opaque aux rayons X dans une relation coaxiale à la fente annulaire.

10. Procédé de fabrication d'un élément opaque aux rayons X qui est prévu sur une extrémité ouverte d'un corps de miroir (10) à rayons X du type Wolter comportant une surface interne définissant une surface réfléchissante de miroir (16) possédant une surface de révolution et qui permet uniquement le passage de rayons X pénétrant sur la surface réfléchissante de miroir (16) et des rayons X réfléchis par la surface réfléchissante de miroir (16), caractérisé en ce que le procédé comprend les étapes consistant à :
former une fente (30) qui peut être pénétrée par les rayons X, ayant une configuration essentiellement annulaire, par un procédé de photogravure, dans une plaque (28) opaque aux rayons X qui a une dimension suffisamment grande pour bloquer ladite extrémité ouverte du miroir (10) pour rayons X et qui empêche le passage des rayons X; et
fixer un élément d'installation cylindrique (24) qui est capable d'être installé par-dessus ladite portion terminale ouverte du miroir pour rayons X, sur la plaque opaque aux rayons X du côté externe de la fente pour être coaxial à cette dernière.
